# EUROPÄISCHE PATENTSCHRIFT

(11) **EP 0 709 566 B1**
(45) Veröffentlichungstag und Bekanntmachung des Hinweises auf die Patenterteilung: **31.03.1999**
(21) Anmeldenummer: 95112293.6
(22) Anmeldetag: 04.08.1995
(51) Int. Cl.: F02M 31/135

(54) **Brennstoffeinspritzvorrichtung für eine Brennkraftmaschine**
Fuel injection device for an internal combustion engine
Dispositif d'injection de carburant pour un moteur à combustion interne

(30) Priorität: 27.10.1994 DE 4438335
(43) Veröffentlichungstag der Anmeldung: 01.05.1996
(73) Patentinhaber: ROBERT BOSCH GMBH, 70442 Stuttgart (DE)
(72) Erfinder: Awarzamani, Assadollah, Dipl.-Ing., D-71706 Markgröningen (DE); Wilfert, Thomas, Dipl.-Ing., D-71636 Ludwigsburg (DE); Heyse, Jörg, Dipl.-Ing., D-71706 Markgröningen (DE)

(56) Entgegenhaltungen:
- EP-A- 0 453 927
- DE-A- 3 024 846
- DE-A- 3 411 392
- DE-A- 3 841 720
- US-A- 4 653 443
- US-A- 5 038 742
- US-A- 5 174 266

## Beschreibung

### Stand der Technik

Die Erfindung geht aus von einer Brennkraftmaschine mit einer Brennstoffeinspritzvorrichtung nach der Gattung des Anspruchs 1, beziehungsweise des Anspruchs 5. Es ist schon eine Brennkraftmaschine mit einer Brennstoffeinspritzvorrichtung bekannt (EP-PS 0 453 927), bei der ein Brennstoffeinspritzventil an einem Ansaugrohr angebracht ist, um Brennstoff in Richtung eines Einlaßventils der Brennkraftmaschine abzuspritzen. Der Brennstoff verläßt das Brennstoffeinspritzventil in Form eines Brennstoffstrahls, der teilweise auf eine Wandung des Ansaugrohres und auf das Einlaßventil auftrifft, wobei es im kalten Zustand der Brennkraftmaschine oder bei plötzlichen Lastwechseln zu einer Kondensation des abgespritzten Brennstoffs kommt. Der kondensierte Brennstoff schlägt sich dabei in Form eines Wandfilms teilweise an der Wandung des Ansaugrohres und am Einlaßventil nieder, wobei sich aus dem Wandfilm relativ große Tropfen ablösen können. Die abgelösten Tropfen gelangen in den Brennraum der Brennkraftmaschine, so daß sich dort ein lokal überfettetes Gemisch einstellt, welches durch eine unvollständige Verbrennung die schädlichen Bestandteile im Abgas erhöht.

Um diese nachteiligen Folgen zu verringern, wird der auf die Wandung des Ansaugrohres auftreffende Brennstoffstrahl beheizt, wozu ein elektrisches Heizelement vorgesehen ist. Das elektrische Heizelement ist beispielsweise bündig in der Wandung des Ansaugrohres untergebracht und besitzt eine Heizfläche zur Erwärmung des auf die Heizfläche auftreffenden Brennstoffstrahls, damit dieser teilweise in den dampfförmigen Zustand übergeht. Der teilweise dampfförmig vorhandene Brennstoff verhindert eine Kondensation des Brennstoffs an kalten Wänden, beziehungsweise die Ausbildung des Wandfilms. Im angegebenen Stand der Technik werden zur Beheizung mehrere elektrische Widerstandselemente, sogenannte PTC-Widerstandselemente benutzt, welche bei Bestromung aufgrund ihres elektrischen Widerstandes Wärme an die Heizfläche abgeben. Derartige PTC-Widerstandselemente weisen jedoch ein schlechtes dynamisches Verhalten auf, so daß eine relativ lange Wartezeit erforderlich ist, bis sich nach dem Anschalten des PTC-Widerstandselements eine gewünschte Oberflächentemperatur an der Heizfläche einstellt. Zusätzlich müssen die PTC-Widerstandselemente mit guter thermischer Isolation im Einbaubereich untergebracht werden, um einen Wärmeabfluß im Einbaubereich so niedrig wie möglich zu halten. Die PTC-Widerstandselemente benötigen zum Betrieb eine hohe elektrische Leistung, welche insbesondere beim Startvorgang der Brennkraftmaschine die begrenzte Energiereserve einer Starterbatterie überschreiten kann, so daß es bisher noch zu keiner technischen Verwirklichung der Brennstoffaufheizung mittels PTC-Widerstandselementen gekommen ist.

### Vorteile der Erfindung

Die erfindungsgemäße Brennkraftmaschine mit einer Brennstoffeinspritzvorrichtung mit den kennzeichnenden Merkmalen des Anspruchs 1, beziehungsweise des Anspruchs 5 hat demgegenüber den Vorteil, daß auf einfache Art und Weise eine Kondensation des abgespritzten Brennstoffs vermieden wird, wobei nur eine geringe elektrische Leistung notwendig ist, um eine Aufheizung des auftreffenden Brennstoffstrahls zu ermöglichen, wonach der Brennstoffstrahl zumindest teilweise verdampft. Insbesondere während des Kaltstarts und der nachfolgenden Warmlaufphase sowie bei bestimmten Betriebsbereichen der Brennkraftmaschine erfolgt dadurch eine deutliche Reduzierung der schädlichen Bestandteile im Abgas. Die Aufheizung erfolgt vorteilhafterweise mit hoher Geschwindigkeit, so daß bereits unmittelbar nach dem Start der Brennkraftmaschine eine Abnahme der schädlichen Bestandteile im Abgases erzielbar ist.

Durch die in den Unteransprüchen aufgeführten Maßnahmen sind vorteilhafte Weiterbildungen und Verbesserungen der im Anspruch 1, beziehungsweise im Anspruch 5 angegebenen Brennkraftmaschine mit einer Brennstoffeinspritzvorrichtung möglich.

### Zeichnung

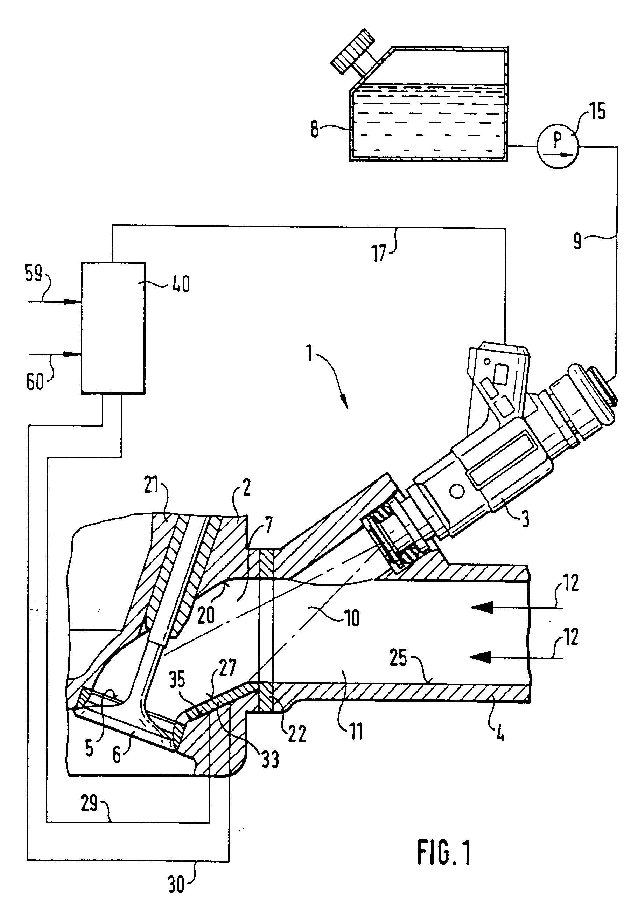

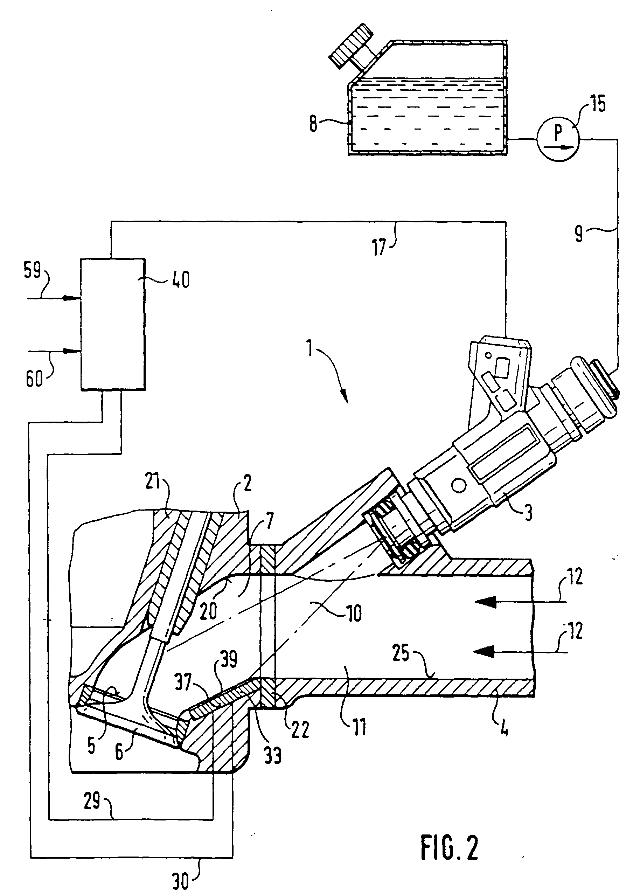

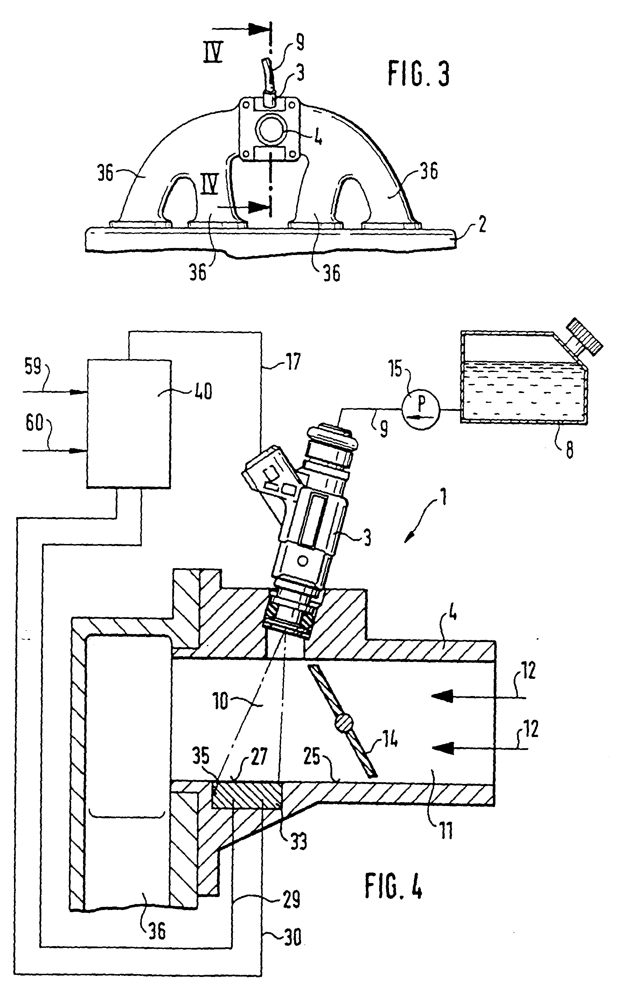

Ausführungsbeispiele der Erfindung sind in der Zeichnung vereinfacht dargestellt und in der nachfolgenden Beschreibung näher erläutert. Es zeigen Figur 1 in teilweiser Schnittdarstellung eine erfindungsgemäße Brennkraftmaschine mit einer Brennstoffeinspritzvorrichtung gemäß einem ersten Ausführungsbeispiel, Figur 2 eine teilweise Schnittdarstellung der erfindungsgemäßen Brennkraftmaschine mit der Brennstoffeinspritzvorrichtung gemäß einem zweiten Ausführungsbeispiel, Figur 3 eine Draufsicht der erfindungsgemäßen Brennkraftmaschine mit der Brennstoffeinspritzvorrichtung gemäß einem dritten Ausführungsbeispiel, Figur 4 eine Schnittdarstellung entlang einer Linie IV-IV in Figur 3.

### Beschreibung der Ausführungsbeispiele

Die Figur 1 zeigt in teilweiser Schnittdarstellung eine mit 1 gekennzeichnete Brennstoffeinspritzvorrichtung, die insbesondere für eine gemischverdichtende, fremdgezündete Brennkraftmaschine 2 vorgesehen ist, welche ebenfalls in teilweiser Schnittdarstellung gezeigt ist. Die Brennstoffeinspritzvorrichtung 1 besitzt wenigstens ein Brennstoffeinspritzventil 3, das beispielsweise steckbar an einem Ansaugrohr 4 der Brennkraftmaschine 2 angebracht ist. Das Brennstoffeinspritzventil 3 ist derart angeordnet, daß der Brennstoff vom Brennstoffeinspritzventil 3 in Richtung einer Einlaßöffnung 5 wenigstens eines Einlaßventils 6 der Brennkraftmaschine 2 abgespritzt wird. Die Einlaßöffnung 5 ist Teil eines in einem Zylinderkopf 21 vorgesehenen Einlaßkanals 7, der in Verlängerung eines vom Ansaugrohr 4 begrenzten Ansaugkanals 11 zum Einlaßventil 6 führt. Im Ansaugkanal 11 des Ansaugrohres 4 und im Einlaßkanal 7 strömt entlang eingezeichneter Pfeile 12, in den Figuren 1, 2 und 4 von rechts nach links, die von der Brennkraftmaschine 2 angesaugte Ansaugluft, welche sich mit dem vom Brennstoffeinspritzventil 3 abgespritzten Brennstoff im Ansaugkanal 11 und insbesondere im Einlaßkanal 7 vermischt, um nach der Einlaßöffnung 5 des Einlaßventils 6 in Form eines Brennstoff-Luft-Gemisches in wenigstens einem Brennraum der Brennkraftmaschine 2 zu verbrennen. Die Menge der Ansaugluft ist in bekannter Weise von einem in Figur 4 dargestellten, stromaufwärts des Brennstoffeinspritzventils 3 im Ansaugkanal 11 drehbar untergebrachten Drosselorgan steuerbar, welches beispielsweise in Form einer Drosselklappe 14 ausgebildet ist.

Die Brennstoffeinspritzventile 3 sind zur Brennstoffversorgung, beispielsweise über einen gemeinsamen Kraftstoffverteiler (ein sogenanntes Fuel-Rail), an einer in den Figuren 1, 2 und 4 dargestellten Brennstofförderpumpe 15 angeschlossen, welche den Brennstoff vom Brennstoffbehälter 8 über eine Brennstoffleitung 9 zum Kraftstoffverteiler und von dort zu den einzelnen Brennstoffeinspritzventilen 3 fördert. Der Brennstoff wird im Brennstoffeinspritzventil 3 in bekannter Weise von einem Ventilschließkörper, beispielsweise einer Ventilschließkugel oder einer Ventilschließnadel und einem Ventilsitz zugemessen. Das Brennstoffeinspritzventil 3 ist beispielsweise elektromagnetisch betätigbar ausgebildet und über eine elektrische Anschlußleitung 17 zum Beispiel von einem elektronischen Steuergerät 40 ansteuerbar. Das elektronische Steuergerät 40 ist mit Betriebsgrößen der Brennkraftmaschine 2 erfassenden Mitteln, beispielsweise Sensoren verbunden, um aus der Auswertung der Betriebsgrößen unter anderem die Abspritzmenge des Brennstoffeinspritzventils 3 zu steuern, so daß beispielsweise eine Motorleistungssteuerung der Brennkraftmaschine 2 möglich ist. Dem elektronischen Steuergerät 40 werden hierfür elektrische Signale 59 zugeführt, die beispielsweise von einem Drosselklappenpotentiometer stammen, das Auskunft über die Lage und die Lageänderung der Drosselklappe 14 gibt. Weiterhin kann das elektronische Steuergerät 40 mit einem im Ansaugkanal 11 des Ansaugrohres 4 der Brennkraftmaschine 2 untergebrachten Luftmassenmesser verbunden sein, welcher elektrische Signale 60 entsprechend der im Ansaugkanal 11 des Ansaugrohres 4 strömenden Ansaugluftmasse dem elektronischen Steuergerät 40 zuführt.

Der Brennstoff verläßt das Brennstoffeinspritzventil 3 in Form eines gebündelten, beispielsweise kegelförmigen oder schnurstrahlförmigen Brennstoffstrahls 10, dessen äußere Begrenzung durch zwei in den Figuren 1, 2 und 4 eingezeichnete Linien gekennzeichnet ist. Der vom Brennstoffeinspritzventil 3 abgespritzte Brennstoffstrahl 10 trifft im ersten Ausführungsbeispiel nach Figur 1 und im zweiten Ausführungsbeispiel nach Figur 2 teilweise auf eine Innenwandung 20 des Einlaßkanals 7. An der Verbindungsstelle zwischen Ansaugrohr 4 und Einlaßkanal 7 ist ein Dichtungsring 22 vorgesehen, um das Ansaugrohr 4 auch thermisch von dem Zylinderkopf 21 abzukoppeln.

Erfindungsgemäß ist an der Innenwandung 20 des Einlaßkanals 7, die zumindest teilweise von dem Brennstoffstrahl 10 getroffen wird, ein Peltierelement 33 vorgesehen, um mittels des Peltierelements 33 den Brennstoffstrahl 10 aufzuheizen. Im folgenden wird der Aufbau und die Funktion von Peltierelementen näher erläutert. Peltierelemente nutzen den von dem französischen Physiker Jean Peltier entdeckten und nach ihm benannten Effekt aus, daß bei der Verbindung zweier unterschiedlicher Metalle an zwei Verbindungsstellen bei Stromfluß in den Metallen zwischen diesen Verbindungsstellen sich eine Temperaturdifferenz ergibt. Je nach Richtung des in den Metallen strömenden elektrischen Stromes erwärmt sich eine der Verbindungsstellen, wohingegen sich die andere abkühlt. Dieser Effekt ist auch mittels unterschiedlich dotierter Halbleitermaterialien erzielbar, welche beispielsweise mit Wismut oder Tellurid-Kombination dotiert sind, um mittels der dotierten Halbleitermaterialien thermoelektrische Brücken zu bilden, die einen Elektronenüberschuß (n-Typ) und einen Elektronenmangel (p-Typ) aufweisen. Das in den Ausführungsbeispielen eingesetzte Peltierelement 33 hat eine Vielzahl derartiger thermoelektrischer Brücken, die elektrisch in Reihe geschaltet und zwischen zwei dünnen Keramikplättchen untergebracht sind. Wird das Peltierelement 33 an eine Gleichstromquelle angeschlossen, so erwärmt sich eine mit Keramik bedeckte Oberfläche 27 des Peltierelements 33, wohingegen eine gegenüberliegende, ebenfalls mit Keramik bedeckte Unterfläche 28 entsprechend abkühlt. In den Ausführungsbeispielen ist die kühle Unterfläche 28 des Peltierelements 33 thermisch mit der Innenwandung 20 des Zylinderkopfes 21 oder mit einer Innenwandung 25 des Ansaugrohres 4 verbunden. Die aufheizbare Oberfläche 27 des Peltierelements 33 ist dem Brennstoffstrahl 10 des Brennstoffeinspritzventils 3 zugewandt, also in das Innere des Ansaugrohres 4 beziehungsweise des Ansaugkanals 11 ausgerichtet. Das Peltierelement 33 besitzt eine einer Wärmepumpe entsprechende Funktionsweise, der elektrische Energie zugeführt wird, um Wärme aus der Umgebung zu entnehmen und an anderer Stelle mit höherer Temperatur wieder abzugeben. Da die Wärmepumpe das unbegrenzte Wärmereservoir der Umgebung nutzt, sind gute thermische Wirkungsgrade erzielbar. Dementsprechend ist auch beim Betrieb des Peltierelements 33, beziehungsweise zur Beheizung des Brennstoffstrahls 30 nur eine relativ geringe elektrische Leistung notwendig, die zum Beispiel etwa 10 Prozent herkömmlicher elektrischer Heizelemente beträgt, welche die Erwärmung eines stromdurchflossenen elektrischen Widerstandes ausnutzen.

Wie in der Figur 1 dargestellt ist, kann das Peltierelement 33 beispielsweise bündig in der Innenwandung 20 des Zylinderkopfes 21 untergebracht werden, wobei die Oberfläche 27 des Peltierelements 33 in etwa fluchtend zur Innenwandung 20 des Zylinderkopfes 21 ausgerichtet ist. Hierzu hat die Innenwandung 20 eine Ausnehmung 35, die beispielsweise in Form einer in Umfangsrichtung der Innenwandung 20 teilweise erstreckenden Nut 35 ausgebildet ist, um das beispielsweise in Form eines Ringsegmentstücks ausgebildete Peltierelement 33 in der Nut 35 bündig aufzunehmen. Das Peltierelement 33 wird in der Nut 35 beispielsweise eingeklebt, wonach zum Schutz der beispielsweise aus Keramik bestehenden, aufheizbaren Oberfläche 27 des Peltierelements 33 eine Schutzschicht auf die Oberfläche 27 aufgetragen wird, um die Oberfläche 27 zu versiegeln. Die Schutzschicht hat eine gute Wärmeleitfähigkeit, so daß die Beheizung des Brennstoffstrahls 10 nicht gestört wird. Zur Stromversorgung des Peltierelements 33 sind zwei elektrische Anschlußleitungen 29, 30 vorgesehen, die im Zylinderkopf 21 von der Unterfläche 28 des Peltierelements 33 beispielsweise zum elektronischen Steuergerät 40 geführt sind.

Beim Start der Brennkraftmaschine 2 wird das Peltierelement 33 bestromt, so daß sich an der Oberfläche 27 eine Temperaturerhöhung von beispielsweise mindestens 60 Kelvin gegenüber der Umgebung einstellt, um so den teilweise auf die aufgeheizte Oberfläche 27 des Peltierelements 33 auftreffenden Brennstoffstrahl 10 des Brennstoffeinspritzventils 3 zumindest teilweise zu verdampfen. Die Aufheizung und Bestromung des Peltierelements 33 ist im wesentlichen auf die Startphase und die anschließende Aufwärmphase der Brennkraftmaschine 2, beispielsweise auf die ersten 100 Sekunden nach dem Start, beschränkt. In diesen Phasen findet ohne eine derartige Aufheizung des Brennstoffstrahls 10 eine Kondensation des Brennstoffs an kalten Wänden, beispielsweise an der Innenwandung 20 des Zylinderkopfes 21, am Einlaßventil 6 und an Brennrauminnenwänden statt, welche eine Erhöhung der schädlichen Bestandteile im Abgas zu Folge hat. Zusätzlich kann das Peltierelement 33 auch noch in Betriebsbereichen der Brennkraftmaschine 2 bestromt werden, bei denen nur kurzfristig erhöhte Abgasemissionen auftreten, beispielsweise bei Vollast der Brennkraftmaschine. Dies kann mittels des elektronischen Steuergeräts 40 festgestellt werden, welches das Peltierelement 33 kurzzeitig bestromt, um mit der Aufheizung eine verbesserte Zerstäubung mit teilweiser Verdampfung des Brennstoffstrahls 10 zu erhalten, so daß eine deutliche Verminderung der schädlichen Bestandteile im Abgas erzielbar ist.

Wie in der Figur 2, einer teilweisen Schnittdarstellung der erfindungsgemäßen Brennstoffeinspritzvorrichtung 1 gemäß einem zweiten Ausführungsbeispiel, dargestellt ist, ist es auch möglich, das Peltierelement 33 in eine aus dem Zylinderkopf 21 ausgenommene Ausnehmung 37 einzubringen, die sich zum Beispiel von der Verbindungsstelle des Ansaugrohres 4 und des Zylinderkopfes 21 zum Einlaßventil 6 hin in Form eines Schlitzes erstreckt. Die Ausnehmung 37 verläuft vorzugsweise in der Nähe der Innenwandung 20 des Einlaßkanals 70, beispielsweise parallel zur Innenwandung 20 und wird durch eine dünne Metallschicht 39 vom Einlaßkanal 7 getrennt. In die schlitzförmige Ausnehmung 37 kann das entsprechend der Ausnehmung 37 ausgebildete Peltierelement 33 seitlich des Dichtungsringes 22 eingeschoben werden. Die aufheizbare Oberfläche 27 des Peltierelements 33 wird in der Ausnehmung 37 nur von der relativ dünnen Metallschicht 39 des Einlaßkanals 7 bedeckt, so daß eine gute Wärmeleitung von dem Peltierelement 33 zur Innenwandung 20 des Einlaßkanals 7 vorhanden ist, um nahezu verzögerungsfrei einen Teilbereich der Innenwandung 20 aufzuheizen. Aufgrund der das Peltierelement 33 bedeckenden dünnen Metallschicht 39 der Innenwandung 20 des Zylinderkopfes 21 kann auf die im ersten Ausführungsbeispiel nach Figur 1 angegebene Schutzschicht verzichtet werden.

Die Figur 3 zeigt eine Draufsicht der erfindungsgemäßen Brennstoffeinspritzvorrichtung 1 gemäß einem dritten Ausführungsbeispiel, bei dem alle gleichen oder gleichwirkenden Teile mit den gleichen Bezugszeichen der Figuren 1 und 2 gekennzeichnet sind. Im Gegensatz zum ersten und zweiten Ausführungsbeispiel ist das Brennstoffeinspritzventil 3 in Figur 3 an zentraler Stelle im Ansaugrohr 4 angeordnet, um den Brennstoff in das Ansaugrohr 4 abzuspritzen. Der abgespritzte Brennstoff vermischt sich dabei stromabwärts des Brennstoffeinspritzventils 3 mit der Ansaugluft, um in Form eines Brennstoff-Luft-Gemisches in separat ausgebildete Ansaugrohranschlußstücken 36 des Ansaugrohres 4 zu den einzelnen Brennräumen der Brennkraftmaschine 2 zu gelangen. Wie in der Figur 4, einer Schnittdarstellung entlang einer Linie IV-IV in Figur 3, dargestellt ist, ist es auch möglich, den Brennstoffstrahl 10 des Brennstoffeinspritzventils 3 derart auszurichten, daß dieser möglichst vollständig auf die Oberfläche 27 des dort vorgesehenen Peltierelements 33 auftrifft. Dies ermöglicht eine gute Beheizung des Brennstoffstrahls 10 mit beispielsweise vollständiger Verdampfung. Wie in der Figur 4 dargestellt ist, ist das Peltierelement 33 gemäß dem ersten Ausführungsbeispiel nach Figur 1 in eine Nut 35 eingebracht, die jedoch in der Ansaugrohrinnenwandung 25 des Ansaugrohres 4 vorgesehen ist.

Die Form des Peltierelements 33 ist nicht auf die in den Figuren 1 bis 4 dargestellten Ausführungsformen beschränkt, vielmehr können bei Bedarf Peltierelemente 33 mit unterschiedlichen Formen Verwendung finden. Denkbar sind neben der beschriebenen zylindrischen oder plattenförmigen Form des Peltierelements 33 auch gekrümmte Formen. Denkbar ist es auch, mehrere einzelne Peltierelemente 33 im Ansaugrohr 4 unterzubringen, welche dann teilweise in den Ansaugkanal 11 des Ansaugrohres 4 hineinragen. Die in den Ansaugkanal 11 des Ansaugrohres 4 hineinragenden Peltierelemente 33 können beispielsweise in Form eines Strömungsleitgitters mit aerodynamischen Schaufelelementen ausgebildet werden, um so den Brennstoffstrahl 10 möglichst flächig zu beheizen.

## Patentansprüche

1. Brennkraftmaschine mit einer Brennstoffeinspritzvorrichtung (1), wobei die Brennkraftmaschine (2) wenigstens einen mit einem Einlaßkanal (7) versehenen Zylinder hat, in welchen wenigstens ein Brennstoffeinspritzventil (3) Brennstoff in Richtung wenigstens eines in einem Zylinderkopf (21) der Brennkraftmaschine (2) untergebrachten Einlaßventils (6) abspritzt, wobei der das Brennstoffeinspritzventil (3) verlassende Brennstoff zumindest teilweise auf ein elektrisches Heizelement (33) gerichtet ist, dadurch gekennzeichnet, daß das elektrische Heizelement in Form eines Peltierelements (33) ausgebildet ist, das thermisch mit einer Innenwandung (20) des Zylinderkopfes (21) verbunden ist.

2. Brennkraftmaschine nach Anspruch 1, dadurch gekennzeichnet, daß das Peltierelement (33) in der Innenwandung (20) des Einlaßkanals (7) im Zylinderkopf (21) untergebracht ist.

3. Brennkraftmaschine nach Anspruch 2, dadurch gekennzeichnet, daß das Peltierelement (33) mit seiner heizbaren Oberfläche (27) bündig zur Innenwandung (20) des Einlaßkanals (7) im Zylinderkopf (21) untergebracht ist.

4. Brennkraftmaschine nach Anspruch 2, dadurch gekennzeichnet, daß das Peltierelement (33) an der Innenwandung (20) des Einlaßkanals (7) im Zylinderkopf (21) herausragend angeordnet ist.

5. Brennkraftmaschine mit einer Brennstoffeinspritzvorrichtung (1), wobei die Brennkraftmaschine (2) wenigstens einen mit einem Einlaßkanal (7) versehenen Zylinder hat, der an ein Ansaugrohr (4) angeschlossen ist, in welches ein Brennstoffeinspritzventil (3) Brennstoff abgibt, wobei der das Brennstoffeinspritzventil (3) verlassende Brennstoff zumindest teilweise auf ein im Ansaugrohr (4) untergebrachtes, elektrisches Heizelement (33) auftrifft, dadurch gekennzeichnet, daß das elektrische Heizelement in Form eines Peltierelements (33) ausgebildet ist, das thermisch mit einer Innenwandung (25) des Ansaugrohres (4) verbunden ist.

6. Brennkraftmaschine nach Anspruch 5, dadurch gekennzeichnet, daß das Peltierelement (33) in einer Innenwandung (25) eines Ansaugrohres (4) untergebracht ist.

7. Brennkraftmaschine nach Anspruch 2 oder 6, dadurch gekennzeichnet, daß das Peltierelement (33) in einer Ausnehmung (37) im Zylinderkopf (21) oder im Ansaugrohr (4) untergebracht ist, durch die eine dünne Metallschicht (39) des Zylinderkopfes (21) oder des Ansaugrohres (4) von dem Einlaßkanal (7) beziehungsweise Ansaugkanal (11) getrennt ist.

8. Brennkraftmaschine nach Anspruch 5, dadurch gekennzeichnet, daß das Peltierelement (33) mit seiner heizbaren Oberfläche (27) bündig zur Innenwandung (25) des Ansaugrohres(4) im Ansaugrohr (4) untergebracht ist.

9. Brennkraftmaschine nach Anspruch 5, dadurch gekennzeichnet, daß das Peltierelement (33) an der Innenwandung (25) des Ansaugrohres (4) herausragend angeordnet ist.

## Claims

1. Internal combustion engine having a fuel injection device (1), the internal combustion engine (2) having at least one cylinder, which is provided with an inlet port (7), and into which at least one fuel injection valve (3) sprays fuel in the direction of at least one inlet valve (6) accommodated in a cylinder head (21) of the internal combustion engine (2), the fuel leaving the fuel injection valve (3) being directed at least in part at an electric heating element (33), characterized in that the electric heating element is in the form of a Peltier element (33), which is thermally connected to an inner wall (20) of the cylinder head (21).

2. Internal combustion engine according to Claim 1, characterized in that the Peltier element (33) is accommodated in the inner wall (20) of the inlet port (7) in the cylinder head (21).

3. Internal combustion engine according to Claim 2, characterized in that the Peltier element (33) is accommodated with its heatable upper surface (27) flush with the inner wall (20) of the inlet port (7) in the cylinder head (21).

4. Internal combustion engine according to Claim 2, characterized in that the Peltier element (33) is arranged in a projecting manner on the inner wall (20) of the inlet port (7) in the cylinder head (21).

5. Internal combustion engine having a fuel injection device (1), the internal combustion engine (2) having at least one cylinder, the latter being provided with an inlet port (7) and being connected to an intake pipe (4) into which a fuel injection valve (3) dispenses fuel, the fuel leaving the fuel injection valve (3) at least in part striking an electric heating element (33) accommodated in the intake pipe (4), characterized in that the electric heating element is in the form of a Peltier element (33), which is thermally connected to an inner wall (25) of the intake pipe (4).

6. Internal combustion engine according to Claim 5, characterized in that the Peltier element (33) is accommodated in an inner wall (25) of an intake pipe (4).

7. Internal combustion engine according to Claim 2 or 6, characterized in that the Peltier element (33) is accommodated in a recess (37) in the cylinder head (21) or in the intake pipe (4), which recess is separated from the inlet port (7) or intake duct (11) by a thin metal layer (39) of the cylinder head (21) or of the intake pipe (4).

8. Internal combustion engine according to Claim 5, characterized in that the Peltier element (33) is accommodated in the intake pipe (4) with its heatable upper surface (27) flush with the inner wall (25) of the intake pipe (4).

9. Internal combustion engine according to Claim 5, characterized in that the Peltier element (33) is arranged in a projecting manner on the inner wall (25) of the intake pipe (4).

## Revendications

1. Moteur à combustion interne équipé d'une installation d'injection de carburant (1), le moteur (2) ayant au moins un cylindre équipé d'un canal d'admission (7) dans lequel au moins un injecteur de carburant (3) injecte du carburant en direction d'au moins une soupape d'admission (6) logée dans une culasse (21) du moteur (2), le carburant émis par l'injecteur (3) étant dirigé au moins en partie sur un élément chauffant électrique (33),
caractérisé en ce que
l'élément électrique chauffant se présente sous la forme d'un élément à effet Peltier (33) relié thermiquement à une paroi intérieure (20) de la culasse (21).

2. Moteur à combustion interne selon la revendication 1,
caractérisé en ce que
l'élément à effet Peltier (33) est logé dans la paroi intérieure (20) du canal d'admission (7) dans la culasse (21).

3. Moteur à combustion interne selon la revendication 2,
caractérisé en ce que
l'élément à effet Peltier (33) est à fleur avec sa surface chauffante (27) par rapport à la paroi intérieure (20) du canal d'admission (7) dans la culasse (21).

4. Moteur à combustion interne selon la revendication 2,
caractérisé en ce que
l'élément à effet Peltier (33) est prévu sur la paroi intérieure (20) du canal d'admission (7) en venant en saillie dans la culasse (21).

5. Moteur à combustion interne équipé d'une installation d'injection de carburant (1), le moteur (2) ayant au moins un cylindre muni d'un canal d'admission (7) raccordé à une tubulure d'aspiration (4) dans laquelle un injecteur (3) émet du carburant, le carburant sortant de l'injecteur (3) arrivant au moins en partie sur un élément chauffant électrique (33) logé dans la tubulure d'aspiration (4),
caractérisé en ce que
l'élément chauffant électrique est réalisé sous la forme d'un élément à effet Peltier (33) relié thermiquement à la paroi intérieure (25) de la tubulure d'aspiration (4).

6. Moteur à combustion interne selon la revendication 5,
caractérisé en ce que
l'élément à effet Peltier (33) est logé dans une paroi intérieure (25) d'une tubulure d'aspiration (4).

7. Moteur à combustion interne selon la revendication 2 ou 6,
caractérisé en ce que
l'élément à effet Peltier (33) est logé dans une cavité (37) de la culasse (21) ou dans la tubulure d'aspiration (4) qui est séparée par une couche métallique mince (39) de la culasse (21) de la tubulure d'aspiration (4) par rapport au canal d'admission (7) ou au canal d'aspiration (11).

8. Moteur à combustion interne selon la revendication 5,
caractérisé en ce que
l'élément à effet Peltier (33) est à fleur avec la paroi intérieure (25) de la tubulure d'aspiration (4) dans celle-ci, avec sa surface chauffante (27).

9. Moteur à combustion interne selon la revendication 5,
caractérisé en ce que
l'élément à effet Peltier (33) est logé de manière à venir en saillie par rapport à la paroi intérieure (25) de la tubulure d'aspiration (4).
